# EUROPÄISCHE PATENTSCHRIFT

(11) **EP 1 230 037 B1**
(45) Veröffentlichungstag und Bekanntmachung des Hinweises auf die Patenterteilung: **13.07.2005**
(21) Anmeldenummer: 00965806.3
(22) Anmeldetag: 01.09.2000
(51) Int. Cl.: B05D 5/08, B05D 7/24

(54) **BESCHICHTUNGSVERFAHREN**
COATING METHOD
PROCEDE DE REVETEMENT

(30) Priorität: 27.09.1999 DE 19946280
(43) Veröffentlichungstag der Anmeldung: 14.08.2002
(73) Patentinhaber: Nanogate Coating Systems GmbH, 66121 Saarbrücken (DE)
(72) Erfinder: JONSCHKER, Gerhard, D-66583 Spiesen-Eversberg (DE); BENTHIEN, Thomas, D-66125 Saarbrücken (DE); WARSCHBURGER, Günter, D-66280 Sulzbach (DE)
(74) Vertreter: von Kreisler, Alek, Dipl.-Chem.
(86) Internationale Anmeldenummer: PCT/DE2000/002988
(87) Internationale Veröffentlichungsnummer: WO 2001/023101

(56) Entgegenhaltungen:
- EP-A- 0 845 301
- US-A- 4 842 989
- US-A- 4 863 136
- US-A- 5 939 141

## Beschreibung

Die vorliegende Erfindung befasst sich mit der Beschichtung von Gegenständen.

Die Beschichtung von Gegenständen per se wird seit langem verwendet, um bestimmte erwünschte Oberflächeneigenschaften zu erzielen, etwa eine Hydrophobierung und/oder Oleophobierung und/oder schmutzabweisende- und/oder Antihafteigenschaften. So ist es bekannt, dünne Schichten einer fluorhaltigen silizium-organischen Verbindung herzustellen, um insbesondere eine leicht zu reinigende Oberfläche zu erzielen. Derartige Schichten finden beispielsweise im Sanitärbereich Anwendung.

Um solche Schichten nach dem Stand der Technik aufzubringen, werden die fluorhaltigen silizium-organischen Substanzen, die die Verbindung bilden sollen, in einem Lösungsmittel gelöst.

Typisch werden fluorhaltige silizium-organische Substanzen verwendet, die auf dem Gegenstand vernetzt werden können, um so eine abriebfeste und haltbare Schicht zu erzeugen.

Dieses fluorsubstanzhaltige Lösungsmittel wird dann auf den zu beschichtenden Gegenstand durch Tauchen oder dergl. aufgebracht. Nach Verflüchtigung des Lösungsmittels können die fluorhaltigen Substanzen dann mitsamt dem Gegenstand erwärmt werden, um die Vernetzung der fluorhaltigen Substanzen zu der beschichtungsbildenden fluorhaltigen Verbindung zu bewirken.

Dieses Verfahren ist aus bestimmten Gründen nachteilig. So ist z. B. per se oft nachteilig und/oder unerwünscht, ein Lösungsmittel zu verwenden. Weiter sind die fluorhaltigen Substanzen zumindest zum Teil autophob, also selbstabstoßend.

Dies führt dazu, dass sich die bei Verdampfen des Lösungsmittels zurückbleibenden fluorhaltigen Substanzen selbst abstoßen, was den Aufbau einer homogenen und/oder dicken Schicht stört.

US 4,836,136 A beschreibt ein Plasma-CVD-Verfahren, in dem ein fluoriertes Silan auf eine Oberfläche aufgebracht werden kann und anschließend plasmapolymerisiert wird.

EP 0845301 A1 beschreibt ein Verfahren, in dem fluoralkylsubstituierte Chlorsilane als Schutzschicht auf mikromechanische Vorrichtungen (micro mechanical devices = MEMS) in einem Bedampfungsverfahren aufgebracht werden.

US 4,842,989 A beschreibt eine Photoresist-Schicht für Anwendungen in der Lithographie und ein Verfahren zu deren Herstellung, die mit Hilfe von Plasmapolymerisation fluorierter Methacrylate und fluorierter Acrylate gewonnen wird.

Die Aufgabe der vorliegenden Erfindung besteht darin, ein Beschichtungsverfahren bereitzustellen, bei dem sich das Beschichtungsmaterial besser handhaben Lässt. Die Lösung dieser Aufgabe wird unabhängig beansprucht; bevorzugte Ausführungsformen sind in den Unteransprüchen angegeben.

In einer ersten Ausführungsform wird diese Aufgabe gelöst durch ein Verfahren zur hydrophoben und/oder oleophoben Beschichtung eines Gegenstandes, bei welchem zur Schichtbildung durch Bedampfung ein Material enthaltend zumindest eine siliziumorganische fluorhaltige Substanz, die bei erhöhter Temperatur einen messbaren Dampfdruck besitzt, erwärmt wird und auf dem Gegenstand eine Schicht erzeugt wird, dadurch gekennzeichnet, dass erwärmtes silizium-organisches fluorhaltiges Material mit einem Oligomerisierungsgrad zwischen 3 und 25 Monomere am Gegenstand abgelagert wird, und so der Schichtaufbau bewirkt wird. Auf diese Weise kann insbesondere eine Hydrophobierung und/oder Olephobierung erzielt werden.

Die Verwendung eines Materials aus einer oder mit wenigstens einer fluororganisch gebunden enthaltenen Substanz mit messbarem Dampfdruck ist beim Aufbau der Beschichtung dabei, unabhängig von der Art der Auftragung bereits deshalb vorteilhaft, weil dies während der im erwärmten Zustand typisch stattfindenden Vernetzung zu einer Vergleichmäßigung der sich bildenden Schicht unabhängig von der Art und Weise der Auftragung führt, und so insbesondere vermeidet, dass durch Autophobie-Effekte eine lückenhafte und/oder löchrige Beschichtung entstehen kann.

Bevorzugt ist ein Dampfdruck unterhalb einer Zersetzungstemperatur von 0,1 mbar, bevorzugt darüber, um eine hinreichend schnelle Bedampfung zu gewährleisten.

Bevorzugt ist es jedoch, wenn das Material nicht wie herkömmlich bekannt, bei Raumtemperatur mitsamt Lösungsmittel aufgebracht wird, sondern bei einer erhöhten Temperatur zwischen 200 ° C und 300 ° C. Die Verwendung einer erhöhten Temperatur zwischen 250 ° C und 300 ° C ist besonders vorteilhaft. Viele fluorierte und/oder perfluorierte silizium-organische Substanzen, die zur Beschichtungsherstellung verwendet werden, beginnen zwar bei 260 °C bis 270 °C sich sehr langsam und allenfalls schleichend zu zersetzen, aber eine merkliche Substanzzersetzung, die die Messbarkeit eines Dampfdruckes zunichte macht, findet bei typischen Vertretern der genannten Substanzgruppe erst ab etwa 300 °C statt. In besonderen Fällen sind auch noch Temperaturen von um 150 °C zur erfindungsgemäßen Beschichtung verwendbar.

Das Material selbst kann bei diesen Temperaturen aufgedampft bzw. aufgedunstet werden. Dazu kann das Material aus einem Vorrat abgedampft bzw. abgedunstet werden, der selbst erwärmt ist und/oder es wird durch eine erwärmte Düse auf den Gegenstand hin aufgebracht. Alternativ kann sich der Vorrat auf einigen einer Vielzahl gemeinsam erwärmter Gegenstände oder auf Teilflächen derselben befinden. Die Düse kann zu diesem Zweck, z. B. auf die Temperatur von 260 bis 300 °C elektrisch erwärmt werden. Dies ist besonders bevorzugt, wenn sehr kompliziert geformte Bauteile beschichtet werden müssen, bei denen ein Tauchen dazu führt, dass große Mengen an Flüssigkeit in Rinnen und dergl. verbleiben. Andererseits ist es auch möglich, große flächige Gegenstände wie z. B. Fensterscheiben oder Windschutzscheiben mit einer Düsenanordnung zu beschichten.

Die Temperatur des Material respektive der Düse wird bevorzugt höher als jene des Gegenstandes gewählt. Dies hat den Vorteil, dass das Material bzw. die silizium-organische fluorhaltige Substanz dann am kälteren Gegenstand kondensiert bzw. sich ablagert und so den Schichtaufbau bewirkt. Bevorzugt ist, wenn zwar die Temperatur der Substanz höher als jene des Gegenstandes ist, aber die Temperatur des Gegenstandes so hoch ist, dass die Substanz auf dem Gegenstand ohne weiteres vernetzt.

Erfindungsgemäß werden Fluor-Silizium-Verbindungen, insbesondere Perfluoralkylsilane gewählt. Dabei sind zwischen Si-Atomen und Fluor-Atomen im Molekül Spacergruppen vorgesehen, die wenigstens die Länge - (CH₂)₂ aufweisen. Ausgehend von Fluorsilan- und/oder Perfluoralkylsilan-Monomeren werden bevorzugt oligomere Kondensate für die Substanz verwendet, die soweit oligomerisiert sind, dass ein noch messbarer Dampfdruck vorhanden ist. Die Oligomerisierung ist vorteilhaft, weil sich diese Oligomer-Substanzen besser handhaben lassen als Monomere und trotzdem noch einen messbaren Dampfdruck aufweisen, sich also weder durch zu hohe Temperaturen zersetzen, noch, bei niedrigeren Temperaturen, vernetzen. Der Oligomerisierungsgrad wird so gewählt, dass zwischen 3 und 25, bevorzugt zwischen 15 und 20 Monomere oligomerisiert werden.

Die Oligomere sind dabei noch untereinander vernetzbar.

Es kann weiter bevorzugt sein, eine erhöhte Reaktivität des Beschichtungsmaterials dadurch zu erzielen, dass durch Zersetzung eines abgedampften Oligomers in der Dampfphase bei der Herstellung des Oligomers verwendete stabilisierende Moleküle entfernt werden.

Neben den oligomeren Kondensaten können auch reaktive Monomere verwendet werden. Diese können ihre Reaktivität insbesondere aufgrund des Vorhandenseins reaktiver OH-Gruppen besitzen. Eine Reaktivität ist erwünscht, weil dies zur besseren Verbindung mit dem Untergrund beiträgt. Eine höhere Reaktivitat kann insbesondere auch dadurch erreicht werden, dass das Monomer in der Gasphase bzw. im Dunst mit evtl. vorhandener Restfeuchte hydrolysiert und/oder thermolysiert.

Es sei angemerkt, dass das Verfahren auch auf Materialgemische anwendbar ist, in welchen ein Teil des aufgedampften bzw. aufgedunsteten Materials durch nichtfluorierte siliziumorganische Substanzen gebildet ist. Damit kann insbesondere die Vernetzung verbessert werden.

Die Erfindung wird im folgenden nur beispielsweise beschrieben: Als Fluorosilan-Monomer wird Tridecafluor-1,1,2,2-tetrahydrooctyl-1-trimethoxysilan so kondensiert, dass sich ein Oligomer-Gemisch mit einem wesentlichen bis überwiegenden Anteil an Oligomeren aus 3 bis 20 Monomeren bildet.

Dieses Gemisch wird in einen druckluftbeaufschlagbaren Vorratsbehälter gebracht, der mit einer beheizten Düse verbunden ist, über welcher eine Glasplatte angeordnet ist. Die Glasplatte befindet sich in einem Ofen, der auf 200 °C erwärmt wird, wobei die Düse gleichfalls im Ofen angeordnet ist, aber über eine separate Heizung auf eine Temperatur von 260 °C aufgeheizt wird.

Sobald die Temperaturen erreicht sind, wird der Vorratsbehälter druckluftbeaufschlagt. Infolgedessen gelangt Oligomermichung zur Düse und verdampft dort mit merklichem Dampfdruck und ohne wesentlich störende Zersetzung. Der Dampf schlägt sich auf der Glasplatte nieder und vernetzt dort. Nach dem Herausnehmen aus dem Ofen erhält man eine stabile Beschichtung, die eine leichte Reinigung der Glasplatte ermöglicht.

## Patentansprüche

1. Verfahren zur hydrophoben und/oder oleophoben Beschichtung eines Gegenstandes, bei welchem zur Schichtbildung durch Bedampfung ein Material enthaltend zumindest eine siliziumorganische fluorhaltige Substanz, die bei erhöhter Temperatur einen messbaren Dampfdruck besitzt, erwärmt wird und auf dem Gegenstand eine Schicht erzeugt wird, **dadurch gekennzeichnet, dass** erwärmtes silizium-organisches fluorhaltiges Material mit einem Oligomerisierungsgrad zwischen 3 und 25 Monomere am Gegenstand abgelagert wird, und so der Schichtaufbau bewirkt wird.

2. Verfahren nach dem vorhergehenden Anspruch, **dadurch gekennzeichnet, dass** das Material bei einer erhöhten Temperatur zwischen 200°C und 300°C aufgebracht wird.

3. Verfahren nach dem vorhergehenden Anspruch, **dadurch gekennzeichnet, dass** das Material bei einer erhöhten Temperatur zwischen 250°C und 300°C aufgebracht wird.

4. Verfahren nach dem vorhergehenden Anspruch, **dadurch gekennzeichnet, dass** das Material aufgedampft wird.

5. Verfahren nach einem der vorhergehenden Ansprüche, **dadurch gekennzeichnet, dass** das Material aus einem erwärmten Vorrat und/oder einer erwärmten Düse tretend aufgedampft und/oder aufgedunstet wird.

6. Verfahren nach dem vorhergehenden Anspruch, **dadurch gekennzeichnet, dass** die Temperatur des Materials höher als jene des Gegenstandes gewählt wird.

7. Verfahren nach einem der vorhergehenden Ansprüche, **dadurch gekennzeichnet, dass** das Material eine Substanz enthält und/oder durch eine solche gebildet ist, die neben Fluor auch Silizium enthält, wobei das organisch gebundene Fluor über einen wenigstens zwei CH₂-Gruppen umfassenden Spacer vom nächsten Siliziumatom im Molekül beabstandet ist.

8. Verfahren nach einem der vorhergehenden Ansprüche, **dadurch gekennzeichnet, dass** das Material mit einer oder mehrerer Substanzen gewählt wird, die Perfuoralkylsilane umfassen.

9. Verfahren nach dem vorhergehenden Anspruch, **dadurch gekennzeichnet, dass** der Oligomerisierungsgrad so gewählt wird, dass zwischen 15 und 20 Monomere oligomerisiert werden.

10. Verfahren nach einem der vorhergehenden Ansprüche, **dadurch gekennzeichnet, dass** durch die Beschichtung oleophobe und/oder hydrophobe Eigenschaften verliehen werden.

11. Verfahren nach einem der vorhergehenden Ansprüche, **dadurch gekennzeichnet, dass** ein Gemisch verwendet wird, das auch nichtfluorierte Silane enthält.

## Claims

1. A process for the hydrophobic and/or oleophobic coating of an article in which a material containing at least one fluorine-containing organosilicon substance which has a measurable vapor pressure at elevated temperature is heated for vapor deposition, and a layer is produced on said article, **characterized in that** the heated fluorine-containing organosilicon material having a degree of oligomerization of from 3 to 25 monomers is deposited on said article to form the layer.

2. The process according to the preceding claim, **characterized in that** said material is deposited at an elevated temperature of from 200 °C and 300 °C.

3. The process according to the preceding claim, **characterized in that** said material is deposited at an elevated temperature of from 250 °C and 300 °C.

4. The process according to the preceding claim, charactenzed in that said material is applied by vapor deposition.

5. The process according to any of the preceding claims, **characterized in that** said material is applied by vapor deposition and/or gas-phase deposition from a heated stock and/or upon exit from a heated nozzle.

6. The process according to the preceding claim, **characterized in that** said the temperature of said material is selected to be higher than that of said article.

7. The process according to any of the preceding claims, **characterized in that** said material contains and/or is formed from a substance which also contains silicon in addition to fluorine, wherein the organically bonded fluorine is distanced from the nearest silicon atom in the molecule through a spacer which comprises at least two CH₂ groups.

8. The process according to any of the preceding claims, **characterized in that** said material is selected from one or more substances which comprise perfluoroalkylsilanes.

9. The process according to the preceding claim, **characterized in that** said degree of oligomerization is selected from a range of from 15 to 20 monomers.

10. The process according to any of the preceding claims, **characterized in that** said deposition confers oleophobic and/or hydrophobic properties.

11. The process according to any of the preceding claims, **characterized in that** a mixture is employed which also contains non-fluorinated silanes.

## Revendications

1. Procédé pour le revêtement hydrophobe et/ou oléophobe d'un objet, dans lequel, pour la formation d'une couche par vaporisation, on chauffe une matière contenant au moins une substance organosiliciée fluorée, qui présente à température élevée une tension de vapeur mesurable, et on forme une couche sur l'objet, procédé **caractérisé en ce qu'**on dépose sur l'objet de la matière organosiliciée fluorée chauffée, ayant un degré d'oligomérisation compris entre 3 et 25 motifs monomères, et on provoque ainsi la construction de la couche.

2. Procédé selon la revendication 1, **caractérisé en ce que** l'on applique la matière à une température élevée, comprise entre 200 °C et 300 °C

3. Procédé selon la revendication 1 ou 2, **caractérisé en ce que** l'on applique la matière à une température élevée, comprise entre 250 °C et 300 °C.

4. Procédé selon l'une quelconque des revendications précédentes, **caractérisé en ce que** la matière est évaporée.

5. Procédé selon l'une quelconque des revendications précédentes, **caractérisé en ce que** la matière évaporée et/ou vaporisée sort d'un réservoir chauffé et/ou d'une buse chauffée.

6. Procédé selon l'une quelconque des revendications précédentes, **caractérisé en ce que** la température de la matière est plus élevée que celle de l'objet

7. Procédé selon l'une quelconque des revendications précédentes, **caractérisé en ce que** la matière contient une substance et/ou est formée d'une substance, qui contient, outre du fluor, également du silicium, le fluor organiquement lié étant séparé dans la molécule de l'atome de silicium le plus proche par un chaînon d'espacement comprenant au moins deux groupes CH₂.

8. Procédé selon l'une quelconque des revendications précédentes, **caractérisé en ce qu'**on choisit une matière comprenant une ou plusieurs substances qui comprennent des perfluoroalkylsilanes.

9. Procédé selon l'une quelconque des revendications précédentes, **caractérisé en ce que** l'on choisit le degré d'oligomérisation de telle manière qu'il corresponde à 15 à 20 motifs monomères oligomérisés.

10. Procédé selon l'une quelconque des revendications précédentes, **caractérisé en ce que** le revêtement communique des propriétés oléophobes et/ou hydrophobes.

11. Procédé selon l'une quelconque des revendications précédentes, **caractérisé en ce que** l'on emploie un mélange qui contient également des silanes non fluorés.
